# EUROPEAN PATENT SPECIFICATION

(11) **EP 3 530 834 B1**
(45) Date of publication and mention of the grant of the patent: **20.01.2021**
(21) Application number: 17862349.2
(22) Date of filing: 03.10.2017
(51) Int. Cl.: E04C 2/04, E04C 2/292, E04C 2/52, E04B 2/74, B32B 13/04, E04F 13/072

(54) **GYPSUM BUILDING MATERIAL HAVING MAGNETIC LAYER AND METHOD FOR PRODUCING GYPSUM BUILDING MATERIAL HAVING MAGNETIC LAYER**
GIPSBAUMATERIAL MIT MAGNETISCHER SCHICHT UND VERFAHREN ZUR HERSTELLUNG VON GIPSBAUMATERIAL MIT MAGNETISCHER SCHICHT
MATÉRIAU DE CONSTRUCTION EN GYPSE AYANT UNE COUCHE MAGNÉTIQUE ET PROCÉDÉ DE PRODUCTION DE MATÉRIAU DE CONSTRUCTION EN GYPSE AYANT UNE COUCHE MAGNÉTIQUE

(30) Priority: 18.10.2016 JP 2016204734
(43) Date of publication of application: 28.08.2019
(73) Proprietor: Yoshino Gypsum Co., Ltd., Tokyo 100-0005 (JP)
(72) Inventor: WATANABE, Ken, Tokyo 100-0005 (JP); SHIMAZAKI, Junetsu, Tokyo 100-0005 (JP); YOKOYAMA, Itaru, Tokyo 100-0005 (JP); SATO, Yosuke, Tokyo 100-0005 (JP); KANEKO, Takao, Tokyo 100-0005 (JP)
(74) Representative: Ter Meer Steinmeister & Partner
(86) International application number: PCT/JP2017/035944
(87) International publication number: WO 2018/074218

(56) References cited:
- JP-A- H10 290 094
- JP-A- 2003 511 274
- JP-A- 2004 076 538
- JP-A- 2007 149 258
- JP-A- 2013 209 874
- JP-A- 2014 128 917
- JP-B2- H0 676 729
- JP-U- 3 170 251
- JP-U- S55 165 021
- JP-U- S61 128 022
- JP-Y2- H0 410 027
- US-A1- 2003 150 190

## Description

### TECHNICAL FIELD

The present invention relates to a gypsum-based building material with a magnetic layer according to the preamble of claim 1 and to a method according to the preamble of claim 10 for fabricating a gypsum-based building material with a magnetic layer.

### BACKGROUND ART

Conventionally, for example, in school buildings, commercial facilities, and the like, there has been a need to fix printed matter or the like with a magnetic material such as a magnet on a wall or the like. Therefore, as a building material used for forming a wall and the like, a building material capable of adsorbing magnets has been desired.

As the building material capable of adsorbing the magnets, a building material with a thin iron plate deployed on a surface, has been known.

JP H10 290094 A (Nippon Paint Co Ltd, Chiyoda UUT KK) describes an electromagnetic-wave absorption layer being constituted of an organic or inorganic binder and of a magnetic substance powder which uses ferrite metal oxide or a metal magnetic substance such as Fe-Si-alloy or an amorphous alloy comprising Fe or the like.

JP 2004 076538 A (Sakiyama Mari) describes a magnetic body formed on an iron plate or the like, wherein the magnetic body is attached or embedded to/in the wall surface of a building and magnets being installed to the magnetic body from the inside of the building.

US 2003/150190 A1 (Schroth Michael) describes magnetic gypsum or drywall panel, in which a various sized flat, thin gage ferrous metal sheet is inserted such that magnets and magnetic objects can be attached.

### DISCLOSURE OF INVENTION

### PROBLEMS TO BE SOLVED BY THE INVENTION

However, a building material with an iron plate, which is deployed on and fixed to a surface, cannot be processed such as cutting.

One of great advantages of gypsum-based building materials is to be easily cut and process by a cutter or the like, and is to be processed into a desired shape at a construction site; however, the gypsum-based building materials with iron plates, which are deployed on the surface, have a problem of losing such advantages.

In a view of the above problems of the prior art, an object of the present invention is to provide a gypsum-based building material with a magnetic layer capable of adsorbing magnets and easily processing into any shape.

### MEANS FOR SOLVING THE PROBLEMS

In order to solve the above problem, an aspect of the present invention provides a gypsum-based building material with a magnetic layer, including:
the gypsum-based building material;
the magnetic layer covering at least a part of a surface of the gypsum-based building material,
wherein the magnetic layer contains iron powder and a binder, a content per unit area of the iron powder is 0.3 kg/m2 or more and a density of the magnetic layer is 2.0 g/cm3 or more.

### ADVANTAGEOUS EFFECT OF THE INVENTION

According to an aspect of the present invention, it is possible to provide a gypsum-based building material with a magnetic layer capable of adsorbing magnets and easily being processed into any shape.

### BRIEF DESCRIPTION OF THE DRAWINGS

FIG. 1 is a perspective view of a gypsum-based building material with a magnetic layer according to an embodiment of the present invention.
FIG. 2 is a perspective view of the gypsum-based building material with the magnetic layer according to the embodiment of the present invention.
FIG. 3 is an explanatory view of a magnet adsorption test of the gypsum-based building material with the magnetic layer according to the embodiment of the present invention.
FIG. 4 is a cross-sectional view of a wall structure according to the embodiment of the present invention.
FIG. 5 is a perspective view of the wall structure according to the embodiment of the present invention.
FIG. 6 is an explanatory diagram of a method of evaluating the adsorption force of the magnet used in Experimental Example 1 to 1 mm iron plate.

### DESCRIPTION OF EMBODIMENTS

Hereinafter, modes for carrying out the present invention will be described with reference to the drawings. However, the present invention is not limited to the following embodiments, and various modifications and substitutions can be added to the following embodiments without departing from the scope of the present invention.

### [Gypsum-Based Building Material with Magnetic Layer]

One structural example of a gypsum-based building material with a magnetic layer according to the present embodiment will be described.

The gypsum-based building material with the magnetic layer according to the present embodiment includes a gypsum-based building material and a magnetic layer covering at least a part of a surface of the gypsum-based building material. Then, the magnetic layer contains iron powder and a binder, the content of the iron powder per unit area is 0.3 kg/m² or more, and a density of the magnetic layer may be 2.0 g/cm³ or more.

Structural examples of the gypsum-based building material with the magnetic layer according to the present embodiment will be described in detail below.

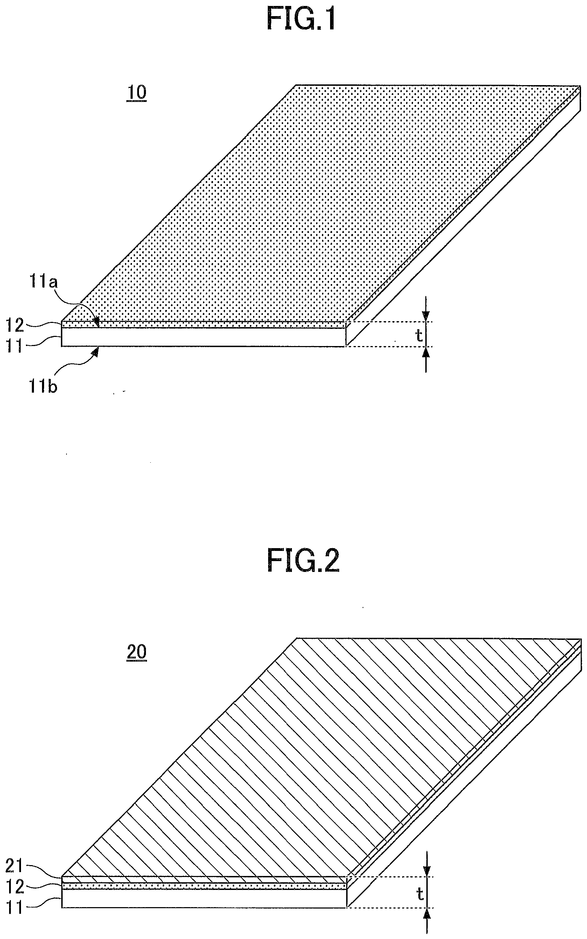

As depicted in FIG. 1, a gypsum-based building material 10 with a magnetic layer of the present embodiment includes a gypsum-based building material 11 and a magnetic layer 12 covering at least a part of a surface of the gypsum-based building material 11.

In the gypsum-based building material 10 with the magnetic layer depicted in FIG. 1, an example, in which the magnetic layer 12 is formed on the entire main surface 11a of the gypsum-based building material 11 is illustrated; however, the magnetic layer may be formed in a portion required to adsorb a magnetic substance such as a magnet, and is not limited to such this form in FIG. 1. For example, it is possible to form a magnetic layer so as to cover a part of the main surface 11a. Moreover, the magnetic layer may be arranged not only on one main surface 11a, but also on a part or the whole of another main surface 11b and a part or the whole of a side surface portion.

Also, a shape of the magnetic layer is not required to have a continuous surface shape, and the shape of the magnetic layer may be, for example, a linear shape, a dot shape, or the like. The gypsum-based building material with the magnetic layer of the present embodiment may also have a plurality of noncontiguous magnetic layers.

Each member included in the gypsum-based building material with the magnetic layer according to the present embodiment will be described below.

The gypsum-based building material 11 is not particularly limited, and various gypsum-based building materials may be used. For example, a gypsum board specified in JIS A 6901 (2014), a gypsum board which is lighter than the gypsum board specified in JIS A 6901 (2014) (hereinafter, both are collectively called "gypsum boards"), a glass mat gypsum board, a glass fiber nonwoven fabric entering gypsum plaster, a slag gypsum plaster, and the like may be used as the gypsum-based building materials. The gypsum-based building material with the magnetic layer of the present embodiment may be preferably used as a material constituting a wall of a building in particular. Because the gypsum-based building material is widely used for wall materials and the like, this material is preferable to be a gypsum board. As mentioned above, the gypsum board here means a gypsum board specified in JIS A 6901 (2014) or a gypsum board lighter than the gypsum board specified in JIS A 6901 (2014). The gypsum board, which is lighter than the gypsum board specified in JIS A 6901 (2014), is preferably a gypsum board having a specific gravity of 0.3 or more and less than 0.65, for example.

The magnetic layer 12 contains iron powder and a binder, and the iron powder content per unit area is preferably 0.3 kg/m² or more, and the magnetic layer density is preferably 2.0 g/cm³ or more.

The magnetic layer 12 is a layer provided so that a magnetic material such as a magnet can be adsorbed, and by containing the iron powder, it is possible to adsorb a magnetic substance such as a magnet.

A material of the iron powder is not particularly limited, and may be optionally selected according to adsorptivity with a magnet, coloring required for a gypsum-based building material with the magnetic layer, other characteristics, and the like. The iron powder may contain one or more kinds selected from iron oxide powder, reduced iron powder, atomized iron powder. For example, in a case in which it is required to increase nonflammability of the gypsum-based building material with the magnetic layer, it is preferable to use the iron oxide powder as the iron powder. The type of iron oxide contained in the iron oxide powder is not particularly limited, but triiron tetroxide may be preferably used.

In addition, a particle size of the iron powder is not particularly limited, and iron powder having any particle size may be used. For the magnetic layer of the gypsum-based building material with the magnetic layer according to the present embodiment, it is preferable to use the iron powder having a particle size generally used; for example, iron powder having an average particle diameter of 20 µm or more and 200 µm or less may be suitably used.

The average particle diameter means a particle diameter at an integrated value of 50% in a particle size distribution obtained by a laser diffraction/scattering method, and it is a volume-based average particle diameter, that is, a volume average particle diameter.

As described above, the content of the iron powder per unit area of the magnetic layer is 0.3 kg/m² or more. This is to make the content per unit area of the iron powder be 0.3 kg/m² or more, and it is possible to adsorb magnetic substances such as magnets to the surface of the gypsum-based building material with the magnetic layer with sufficient adsorption force. In particular, from a viewpoint of enhancing the adsorbability of the magnetic substance such as the magnet, the content per unit area of the iron powder in the magnetic layer is more preferably 0.8 kg/m² or more.

An upper limit of the content per unit area of the iron powder in the magnetic layer is not particularly limited, and it may be optionally selected according to the adsorption force required for the gypsum-based building material with the magnetic layer, cost, and the like, for example. The content of iron powder per unit area of the magnetic layer is preferably 10 kg/m² or less, for example.

Moreover, the density of the magnetic layer is 2.0 g/cm³ or more, more preferably 2.5 g/cm³ or more. This is because by increasing the density of the magnetic layer to 2.0 g/cm³ or more, it is possible to increase the adsorption force of the magnet particularly, and it becomes possible for the magnetic layer to surely adsorb magnetic substances such as the magnets.

An upper limit of the density of the magnetic layer is not particularly limited, and it may be optionally selected according to the adsorption force required for the gypsum-based building material with the magnetic layer, cost, and the like, for example. The density of the magnetic layer is preferably 5.0 g/cm³ or less, for example.

The binder contained in the magnetic layer is not particularly limited, and an inorganic binder, an organic binder, or the like may be used. By using an inorganic binder, it is possible to enhance incombustibility as compared with a case in which an organic binder is used, but the cost generally tends to be higher as compared with the case of using the organic binder. Therefore, it is possible to optionally select a binder based on the performance required for the gypsum-based building material with the magnetic layer, the cost, and the like.

Examples of the inorganic binder include alkali metal silicate type, phosphate type, silica sol type and the like, and examples of the organic binder include vinyl acetate type, acryl type, polyester type and the like. As the binder, one or more kinds selected from the above-mentioned inorganic binder and organic binder may be preferably used.

As described above, in a case of using the inorganic binder as the binder, it is possible to enhance the incombustibility as compared with the case of using the organic binder. Among the inorganic binders, an alkali metal silicate-based binder also acts as a flame retardant material, so that the alkali metal silicate-based binder is preferably used, particularly in applications requiring enhanced incombustibility.

The magnetic layer may contain an optional component in addition to the iron powder and the binder. The magnetic layer may contain a rust preventive agent, for example. By containing the rust preventive agent in the magnetic layer, it is possible to inhibit oxidation of the iron powder contained in the magnetic layer progresses, discoloration, or change in the adsorption force of a magnetic material such as the magnet.

In a case in which the magnetic layer contains the rust preventive agent, it is preferable for the magnetic layer to further contain the rust preventive agent in a proportion of 0.1% by mass or more based on the iron powder, and it is more preferable to contain the rust preventive agent in a proportion of 0.3% by mass or more.

In a case in which the magnetic layer contains the rust preventive agent, the upper limit of the content is not particularly limited, but even if added excessively, there is no significant change in an effect of rust prevention and strength of the magnetic layer may be lowered. Therefore, it is preferable that the magnetic layer contains the rust preventive agent in an amount of 20% by mass or less based on the iron powder, for example.

A type of the rust preventive agent is not particularly limited, but it is preferable that the rust preventive agent contains one or more kinds selected from water-soluble or emulsion organic acid type rust preventive agent, a chelate-based rust preventive agent, an organic acid amine-based rust preventive agent, a fatty acid-based rust preventive agent, and a nitrite-base rust preventive agent.

The magnetic layer may contain another optional additive such as a thickener, an antifoaming agent, a pigment for adjusting the color of the magnetic layer, a filler (bulking material), or the like.

Further, as described below, the magnetic layer may be impregnated with an inorganic coating, or the inorganic coating may be contained in the magnetic layer. Therefore, the magnetic layer may contain a component of the inorganic coating described later, that is, an inorganic flame retardant material, for example. In this case, it is preferred that the magnetic layer contains the component of the inorganic coating at a rate of 20 g/m² or more, more preferably at a rate of 30 g/m² or more.

The thickness of the magnetic layer 12 is not particularly limited, but it is preferably 0.1 mm or more, and more preferably 0.3 mm or more, for example.

Although an upper limit value of a thickness t of the magnetic layer is not particularly limited, but it is preferably 5.0 mm or less, for example.

The gypsum-based building material with the magnetic layer of the present embodiment may have any member other than the gypsum-based building material and the magnetic layer described above. For example, it may have the inorganic coating.

FIG. 2 illustrates a configuration example in a case in which the gypsum-based building material with the magnetic layer according to this embodiment includes the inorganic coating. As depicted in FIG. 2, the gypsum-based building material 20 with the magnetic layer of the present embodiment may further includes an inorganic coating 21 in addition to the gypsum-based building material 11 and the magnetic layer 12.

By further including the inorganic coating 21, it is possible to particularly enhance the incombustibility of the gypsum-based building material 20 with the magnetic layer.

As depicted in FIG. 2, for example, the inorganic coating 21 may be disposed on the surface of the magnetic layer 12, that is, on the magnetic layer 12, and may also serve as a primer treatment by disposing the inorganic coating 21 on the surface of the magnetic layer 12. Therefore, by disposing the inorganic coating 21 on the surface of the magnetic layer 12, it becomes possible to perform wallpaper or the like without performing any other primer treatment, and this is preferable.

In a case in which the gypsum-based building material with the magnetic layer according to the present embodiment includes the inorganic coating 21, an arrangement of the inorganic coating 21 is not particularly limited. For example, the inorganic coating 21 may be disposed so as to cover at least a part of the surface of the magnetic layer 12. In a case of arranging the inorganic coating 21 so as to cover at least the part of the surface of the magnetic layer 12, it is more preferable to form and arrange the inorganic coating 21 so as to cover the entire surface of the magnetic layer 12 as depicted in FIG. 2. Furthermore, the inorganic coating 21 may be impregnated in the magnetic layer 12, or the inorganic coating 21 may be contained in the magnetic layer 12. In this case, it is not necessary for the inorganic coating 21 to exist in a form of a film, and the inorganic coating 21 may be present as one component of the magnetic layer 12 as described above, for example. Also, in a case in which the inorganic coating 21 is impregnated into the magnetic layer 12 or is made to exist as one component of the magnetic layer 12, it is possible to apply a wallpaper or the like without performing the primer treatment.

The mass per unit area of the inorganic coating 21 is not particularly limited, but it is preferably 20 g/m² or more, and more preferably 30 g/m² or more.

The material of the inorganic coating 21 is not particularly limited, but it is preferable that the inorganic coating 21 contains an inorganic flame retardant material, for example. As the inorganic flame retardant material, for example, one or more kinds selected from a metal hydroxide type flame retardant material, an antimony type flame retardant material, a phosphor compound flame retardant material, and an alkali metal silicate type flame retardant material may be preferably used.

Up to this point, the members included in the gypsum-based building material with the magnetic layer of the present embodiment have been described, and the properties and the like of the gypsum-based building material with the magnetic layer of the present embodiment will be described below.

The gypsum-based building material with the magnetic layer of the present embodiment preferably includes a smooth surface.

Here, the fact that the surface (main surface) of the gypsum-based building material with the magnetic layer of the present embodiment is smooth means that when the thickness of the gypsum-based building material with the magnetic layer is measured at a plurality of places, a variation in thickness is 500 µm or less.

The thickness of the gypsum-based building material with the magnetic layer may be measured in the same manner as the standard in "a) Thickness" of "7.3.1 Dimensions" of JIS A 6901 (2014). Specifically, it is possible to measure the thickness at six measurement positions at equal intervals in a region within 25 mm from an end face of the gypsum-based building material with the magnetic layer, which is a sample, and 80 mm or more inside from both side surfaces. Therefore, it can be said that the surface is smooth when the measured variation in the thickness at the six measurement positions is 500 µm or less.

Because the surface of the gypsum-based building material with the magnetic layer is smooth, it is preferable that a flat wall can be formed when used as a wall material or the like, for example. In addition, because the surface of the gypsum-based building material with the magnetic layer is smooth, it is possible to easily perform, on the surface of the gypsum-based building material with the magnetic layer, a paper hanging by attaching wallpaper (wallpaper finish), a paint finishing by applying paint, a decorative finishing such as a lamination processing, a decorative magnet finishing by arranging a decorative magnet, and the like. The decorative magnet finishing refers to finishing a surface of a wall by adsorbing a wallpaper, a decorative plate, a decorative paper on which magnets are arranged on one main surface to the gypsum-based building material with the magnetic layer by the magnet.

Moreover, in the gypsum-based building material with the magnetic layer of the present embodiment, it is preferable that the thickness t satisfies the standard of JIS A 6901 (2014).

Meeting the standard of JIS A 6901 (2014) means that the thickness of the gypsum-based building material with the magnetic layer belongs to any one of ranges of 9.5 mm or more and 10.0 mm or less, 12.5 mm or more 13.0 mm or less, 15.0 mm or more 15.5 mm or less, 16.0 mm or more 16.5 mm or less, 18.0 mm or more 18.5 mm or less, and 21.0 mm or more 21.5 mm or less, 25.0 mm or more and 25.5 mm or less.

When the thickness t of the gypsum-based building material with the magnetic layer meets the standard of JIS A 6901 (2014), the thickness of the gypsum-based building material with the magnetic layer satisfies the same standard as a thickness of a gypsum-based building material which is usually used. Therefore, for example, even when a wall or the like is formed by simultaneously using the gypsum-based building material with the magnetic layer of the present embodiment and an ordinary gypsum-based building material, preferably, it is possible to easily form a flat wall without unevenness, that is, the flat wall according to the type of the gypsum-based building material used without adjusting the thickness and the like.

The thickness t of the gypsum-based building material with the magnetic layer is more preferably in any one of ranges of 9.5 mm or more and 10.0 mm or less, 12.5 mm or more and 13.0 mm or less, 15.0 mm or more and 15.5 mm or less, and 21.0 mm or more and 21.5 mm or less, similarly to a more commonly used gypsum-base building material.

The thickness t of the gypsum-based building material with the magnetic layer as referred to herein means the thickness of the whole gypsum-based building material with the magnetic layer as depicted in FIG. 1 and FIG. 2. For example, in a case in which the gypsum-based building material with the magnetic layer is composed of the gypsum-based building material 11 and the magnetic layer 12 such as the gypsum-based building material 10 with the magnetic layer depicted in FIG. 1, a total thickness of the gypsum-based building material 11 and the magnetic layer 12 is the thickness t of the gypsum-based building material 10 with the magnetic layer.

The thickness of the gypsum-based building material with the magnetic layer can be evaluated by the method specified in JIS A 6901 (2014).

It is preferable that the gypsum-based building material with the magnetic layer of the present embodiment satisfies a quasi-incombustible performance. That is, it is preferable that the gypsum-based building material with the magnetic layer of the present embodiment is recognized as a semi-incombustible material. In addition, the quasi-incombustible is stipulated in Article 1, Item 5 of the Building Standard Law Enforcement Order. In order to be recognized as a semi-incombustible material, it is required to satisfy that a material does not burn for 10 minutes after a start of heating, when fire and fever due to ordinary fire are applied, that the material does not cause harmful deformation, melting, cracking or other damage on fire protection, and that he material does not generate harmful smoke or gas on evacuation.

Moreover, it is preferable that the gypsum-based building material with the magnetic layer of the present embodiment satisfies incombustible performance. That is, it is preferable to be certified as an incombustible material. Incidentally, the incombustibility is stipulated in Article 2, Item 9 of the Building Standard Law, and Article 108 of Article 2 of the Building Standard Law. In order to be recognized as the incombustible material, in a case in which the fire and fever due to ordinary fire are applied, it is required to satisfy that a material does not ignite for 20 minutes after the start of heating, that the material does not cause harmful deformation, melting, cracking or other damage on fire protection, and that the material does not generate harmful smoke or gas on evacuation. By the restrictions imposed by the Building Standards Law, building materials capable of being used are determined to be quasi-incombustible or incombustible, depending on the application and scale of the building. The gypsum-based building material with the magnetic layer of the present embodiment may be adapt to the interior restrictions required for buildings to be used, that is, may be used as the semi-incombustible material and also as the noncombustible material, and thus may be used in buildings of any application and scale.

A specific method for satisfying the quasi-incombustible or incombustible performance of the gypsum-based building material with the magnetic layer of the present embodiment is not particularly limited. For example, by disposing an inorganic coating in addition to the magnetic layer as described above and by selecting a material which is not burnable for the material of the gypsum-based building material and the material of the magnetic layer, it is possible to obtain the gypsum-based building material with the magnetic layer satisfying the quasi-incombustible and incombustible performance.

As described above, it is possible for the gypsum-based building material with the magnetic layer of the present embodiment to adsorb the magnetic substances such as magnets by disposing the magnetic layer. The adsorption force of the magnet is not particularly limited; for example, it is preferable to satisfy the characteristics of a magnet adsorption test described below.

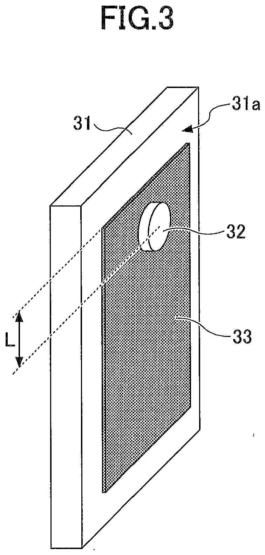

First, as depicted in FIG. 3, the gypsum-based building material 31 with the magnetic layer according to this embodiment is stood so that a main surface 31a is vertical. In a case in which one magnet 32 having a diameter of a magnet portion of 17 mmϕ and an adsorption force of 3.5N to an iron plate was used and an A4 sheet 33 was affixed to the main surface 31a by one magnet, it is preferable that there is the adsorption force for an A4 paper not to fall. Incidentally, to standing so that the main surface 31a stands vertical means to standing so that the main surface of the gypsum-based building material 31 with the magnetic layer having a plate shape, that is, a surface on which the magnet is attracted is vertical with respect to a horizontal direction such as a ground. Hereinafter, the same meaning is referred to for a similar description.

Moreover, it is more preferable to have similar characteristics also in a case in which a wallpaper is disposed on the main surface of the gypsum-based building material with the magnetic layer. That is, the gypsum-based building material 31 with the magnetic layer, the wall surface of which is applied to the main surface 31a, is stood so that the main surface 31a is vertical. In a case in which one magnet 32 having the diameter of the magnet portion of 17 mmϕ and the adsorption force of 3.5N to the iron plate was used and one A4 sheet 33 was attached to the main surface 31a by one magnet, it is preferable that there is the adsorption force for the A4 paper not to fall.

In a case in which the wallpaper is placed on the main surface of the gypsum-based building material with the magnetic layer and the magnet adsorption test is carried out, for example, the wallpaper having a thickness of 0.3 mm, which is generally used, can be used. As the wallpaper, for example, a vinyl cloth or the like can be used.

In any of the above-described magnet adsorption tests, an A4 paper having a thickness of 0.09 mm and a mass of 64 g/m² can be preferably used as the A4 paper. Furthermore, not limited to this magnet attraction test, in the present specification, the A4 paper having the above-mentioned thickness and mass can be preferably used as the A4 paper.

When carrying out any of the above-described magnet adsorption tests, a position, at which the magnetic layer is disposed, is not particularly limited, and the gypsum-based building material with the magnetic layer according to the present embodiment exerts sufficient adsorption force to adsorb the magnet by providing the magnetic layer on at least the part of the surface of the gypsum-based building material. Therefore, it is preferable that the magnetic layer is provided at least at the portion where the magnet 32 is arranged.

The position of the magnet 32 and the A4 paper 33 are not particularly limited, but a distance L between a center of the magnet 32 and an upper end of the A4 paper 33 is preferably 3 cm, and it is preferable that the center of the magnet 32 is arranged at a center in a width direction of the A4 sheet 33.

The gypsum-based building material with the magnetic layer of the present embodiment has been described above; however, it is possible for the gypsum-based building material with the magnetic layer according to the present embodiment to adsorb the magnetic substance such as the magnet by disposing the magnetic layer on at least the part of the surface of the gypsum-based building material. In addition, because the magnetic layer is formed and the inorganic coating may be further formed on at least the part of the surface of the gypsum-based building material, it is possible to easily cut and process into any shape, and the like.

Also, in a case of the gypsum-based building materials, in which conventionally used iron plates are arranged and fixed on the surface, due to the iron plate, it is difficult to strike a screw or a nail and is difficult to fasten the gypsum-based building material. Furthermore, when finishing by a wallpaper or painting, adhesion to the wallpaper or paint is deteriorated.

However, according to the gypsum-based building material with the magnetic layer of the present embodiment, because the magnetic layer is formed and the inorganic coating may be further formed on at least the part of the surface of the gypsum-based building material, it is possible to easily cut and process into any shape, and the like. Furthermore, adhesion to the wallpaper and paint can be sufficiently high.

### [Production Method Of Gypsum-Based Building Material with Magnetic Layer]

Next, a configuration example of a method for fabricating the gypsum-based building material with the magnetic layer according to the present embodiment will be described. The gypsum-based building material with the magnetic layer as described above can be produced by the method for fabricating the gypsum-based building material with the magnetic layer according to the present embodiment. Therefore, a part of items already explained will not be omitted.

The method of fabricating the gypsum-based building material with the magnetic layer of the present embodiment may include a magnetic layer forming step for applying an iron powder-containing coating material for containing iron powder and a binder to at least a part of the surface of the gypsum-based building material to form the magnetic layer.

In the magnetic layer forming step, the magnetic layer is formed so that the content per unit area of the iron powder is 0.3 kg/m² or more and the density of the magnetic layer is 2.0 g/cm³ or more.

It is possible to control the content per unit area of the iron powder in the magnetic layer and the density of the magnetic layer by adjusting according to the particle size of the iron powder contained in the iron powder-containing coating material, and the content (content ratio) of each of components such as the iron powder, kneading water, and the like. Also, in a case of adding a filler (bulk-increasing material) to the iron powder-containing coating material, it is possible to adjust by an addition amount (content) of the filler. For example, an aggregate or the like may be used as the filler, and an inorganic aggregate such as calcium carbonate, pearlite, shirasu balloon, or the like is preferable as the aggregates.

A more preferable range of the density of the magnetic layer and the like have already been described, and the description thereof will be omitted.

In the magnetic layer forming step, means and method for coating the iron powder-containing coating material on at least the part of the surface of the gypsum-based building material are not particularly limited. However, it is preferable to coat the magnetic layer so that the thickness of the magnetic layer to be formed becomes uniform. Therefore, in the magnetic layer forming step, it is preferable to apply the iron powder-containing coating material to at least the part of the surface of the gypsum-based building material by either a roll coater, a flow coater, or a scraping method.

Here, the roll coater is means for applying the iron powder-containing coating material to a rotating roller and forming a magnetic layer on the surface of the gypsum-based building material by the roller. Also, the flow coater is regarded as means that flows the iron powder-containing coating material from the upper side of the gypsum-based building material being transported to the surface of the gypsum-based building material in a form of a thin film, and forms a magnetic layer on the surface of the gypsum-based building material. The scraping method is means (method), in which the iron powder-containing coating material supplied to the surface of the gypsum-based building material is scraped off with a blade or the like, for example, and spread out, so as to have a desired thickness on the surface of the gypsum-based building material.

For the gypsum-based building material to be supplied to the magnetic layer forming step, it is also possible to form a magnetic layer having a desired pattern by previously performing masking or the like on a portion where no magnetic layer is formed.

The method for producing the gypsum-based building material with the magnetic layer according to the present embodiment may have any step in addition to the magnetic layer forming step described above.

As described above, the gypsum-based building material with the magnetic layer of the present embodiment may have the inorganic coating on the magnetic layer. Therefore, in addition to the above magnetic layer forming step, it is also possible to further have the inorganic coating forming step for forming the inorganic coating on the magnetic layer so that the mass per unit area is 20 g/m² or more.

The mass per unit area of the inorganic coating may be 30 g/m² or more as described above. Therefore, in the inorganic coating forming step, it is also possible to form the inorganic coating on the magnetic layer so that the mass per unit area is 30 g/m² or more.

As already described, the inorganic coating may be arranged so as to cover at least the part of the surface of the magnetic layer. Furthermore, it is possible to impregnate the inorganic coating in the magnetic layer, or to contain the inorganic coating in the magnetic layer.

In a case in which the inorganic coating is included in the part of the magnetic layer, the material of the inorganic coating may be added to the iron powder-containing coating material for forming the magnetic layer. In this case, an inorganic coating film is also formed at the same time in the magnetic layer forming step.

The method of fabricating the gypsum-based building material with the magnetic layer according to the present embodiment may further include, if necessary, a drying step for drying the formed magnetic layer and the inorganic coating, a cutting step for cutting gypsum-based building materials with the magnetic layer and gypsum-based building materials as raw materials by given size, and the like.

### [Magnetic Joint Material] as described herein

Next, a configuration example of a magnetic joint material as described herein will be described.

By using the above-described gypsum-based building material with the magnetic layer, it is possible to form a wall or the like capable of adsorbing the magnetic substances such as the magnets; however, when the wall or the like is formed with the gypsum-based building material with the magnetic layer, there may be a portion where the adsorption force of the magnet becomes weak at a boundary between the gypsum-based building materials with the magnetic layer.

Therefore, by performing a joint processing between the gypsum-based building materials with the magnetic layer using the magnetic joint material as described herein, it is possible to prevent the portion where the adsorption force of the magnet is weakened at the boundary between the gypsum-based building materials with the magnetic layer.

The magnetic joint material as described herein contains, for example, the iron powder and the binder, and the iron powder content may be set to 2.0 g/cm³ or more.

In a case in which the content of the iron powder in the magnetic joint material as described herein is 2.0 g/cm³ or more, although sufficient iron powder is contained, the adsorption force of the magnet is sufficient when the material to be treated is solidified, and thus, this is preferable. In particular, from a viewpoint of enhancing the adsorption force of the magnet, the content of the iron powder in the magnetic joint material as described herein is more preferably 2.5 g/cm³ or more.

The upper limit of the iron powder content of the magnetic joint material as described herein is not particularly limited, but is preferably 5.0 g/cm³ or less, for example, from a viewpoint of ensuring the properties of the joint material.

The iron powder used for the magnetic joint material as described herein is not particularly limited, but it is preferable that the iron powder contains at least one kind selected from the iron oxide powder, the reduced iron powder, and the atomized iron powder. Usually, the magnetic joint material is supplied in a state of having fluidity, and a reaction such as oxidation tends to proceed with the binder and other additives. Therefore, from a viewpoint of stabilizing a quality of the iron powder, the iron powder is more preferably the iron oxide powder. The iron oxide powder is not particularly limited, but triiron tetroxide may be preferably used.

In addition, the particle size of the iron powder is not particularly limited, and the iron powder having any particle size may be used. For the magnetic joint material as described herein, it is preferable to use an iron powder having a particle diameter generally used, for example, iron powder having an average particle size of 20 µm or more and 200 µm or less may be suitably used.

The average particle diameter means the particle diameter at an integrated value of 50% in the particle size distribution obtained by a laser diffraction/scattering method, and the diameter is a volume-based average particle diameter, that is, a volume average particle diameter.

Further, the magnetic joint material as described herein may contain other optional components. The magnetic joint material of the present embodiment may contain a rust inhibitor, for example. Because the magnetic joint material contains a rust preventive agent, it is possible to inhibit oxidation of the iron powder contained in the magnetic joint material progresses, discoloration, and change in the adsorption force of the magnet.

In a case in which the magnetic joint material further contains the rust preventive agent, the magnetic joint material preferably further contains the rust preventive agent in a proportion of 0.1% by mass or more based on the iron powder, more preferably in a proportion of 0.3% by mass or more.

In a case in which the magnetic joint material as described herein contains the rust preventive agent, the upper limit of the content is not particularly limited, but even if it is added excessively, the effect of the rust prevention does not change significantly. Also, in consideration of the fabricating cost, it is preferable that the rust preventive agent is contained in a proportion of 20% by mass or less, for example, based on the iron powder.

The kind of the rust preventive agent is not particularly limited, but it is preferable that the rust preventive agent includes one or more kinds selected from water-soluble or emulsion organic acid type rust inhibitors, a chelate type rust preventive agent, an organic acid amine type rust preventive agent, a fatty acid type rust preventive agent, and a nitrite type rust preventive agent, for example.

In addition, the magnetic joint material may contain other optional additives, for example, a pigment or the like for adjusting the color tone of the magnetic joint material.

According to the magnetic joint material as described herein, because the iron powder is contained, it is possible to inhibit the adsorption force of the magnet from decreasing between a plurality of the gypsum-based building materials with the magnetic layer, which constitute the wall or the like, by using for joint treatment between gypsum-based building materials with a magnetic layer or the like.

### [Wall Structure]

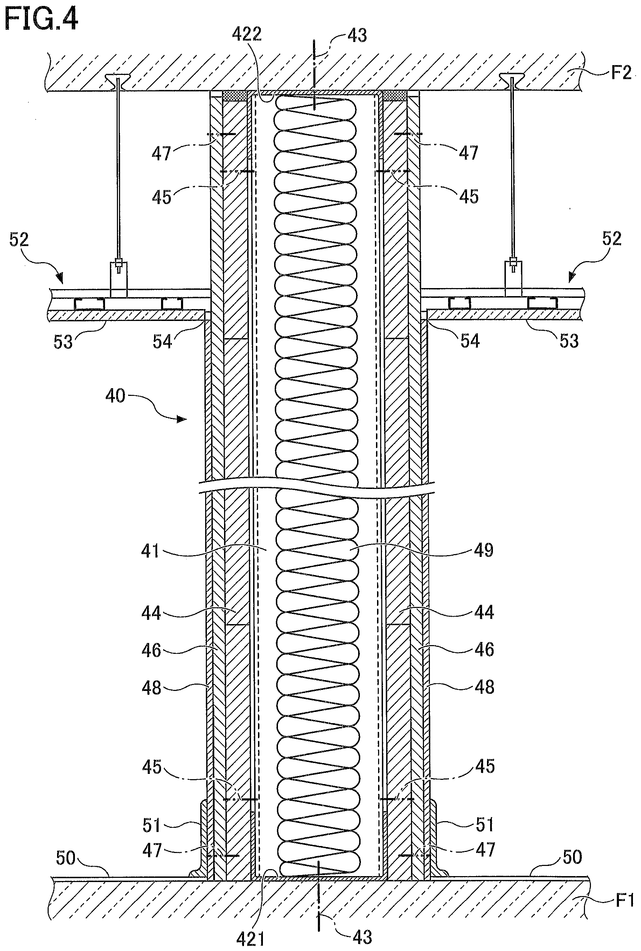

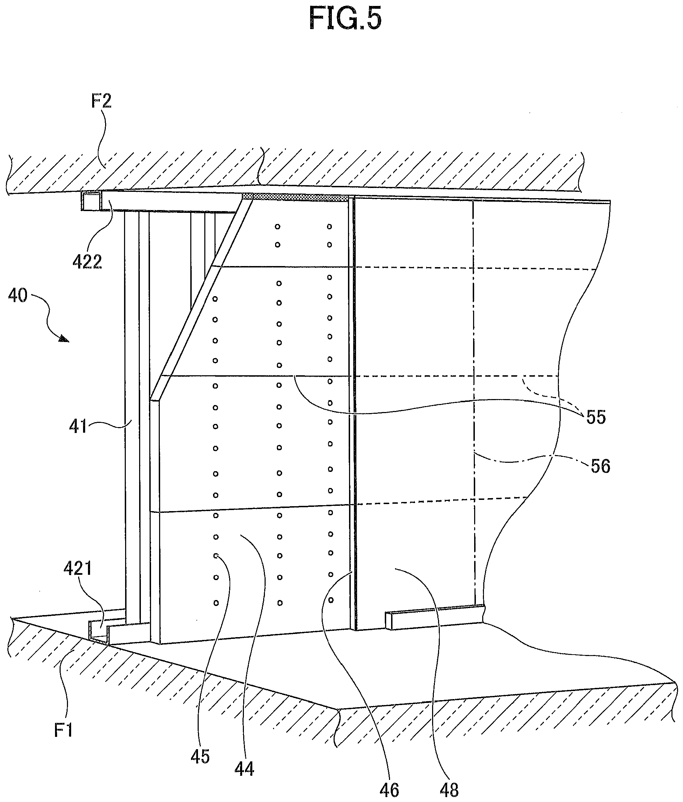

Next, a structural example of a wall structure using the above-described gypsum-based building material with the magnetic layer will be described with reference to FIG. 4 and FIG. 5. FIG. 4 illustrates a sectional view of a partition wall as a wall structure in a plane parallel to a height direction and perpendicular to a main surface of the wall, and FIG. 5 illustrates a perspective view of the partition wall. In FIG. 5, in order to make it easy to understand a structure of the partition wall, descriptions of a ceiling light iron foundation and the like depicted in FIG. 4 are omitted.

The wall structure of the present embodiment may include the gypsum-based building material with the magnetic layer already described, and particularly, it is preferable to include the gypsum-based building material with the magnetic layer already described and the magnetic joint material. A specific configuration example will be described below.

A partition wall 40 depicted in FIG. 4 is installed on a floor slab F1 of a reinforced concrete. A lower end portion of the partition wall 40 is fixed to the floor slab F1, and an upper end portion of the partition wall 40 is fixed to a floor slab F2 of the reinforced concrete of an upper floor. A shaft set of the partition wall 40 is composed of a steel stud 41, a floor runner 421 and an upper runner (ceiling runner) 422. The stud 41 is made of a lightweight steel frame channel member, and the floor runner 421 and the upper runner 422 are made of lightweight channel steel. The floor runner 421 and the upper runner 422 are respectively fixed to the floor slabs F1 and F2 by a locking tool 43 such as an anchor bolt, and a lower end portion and an upper end portion of the stud 41 are respectively engaged with the floor runner 421 and the upper runner 422. The stud 41 is aligned in a wall core direction with a predetermined interval (for example, 455 mm interval) set to have a dimension of about 300 mm to 600 mm, and vertically erected between the floor slabs F1 and F2.

A lower bonding boards 44 is attached to both sides of the stud 41 by means of screws 45 and an upper bonding board 46 is fixed to the surface of the lower bonding board 44 by one or more kinds selected from a locking member 47 such as a staple and an adhesive. As the lower bonding board 44, a non-flammable building material board may be suitably used such as a gypsum board defined by JIS A 6901 (2014), a gypsum board which is lighter than the gypsum board, a gypsum board, a hard gypsum board, a glass fiber reinforced gypsum board, a calcium silicate board, or the like.

On a surface of the upper bonding board 46, a finishing material 48 such as paint or cloth is applied.

A heat insulating material 49 such as glass wool or rock wool can be disposed inside the partition wall 40. Then, a floor finish material 50 is applied on the floor slab F1, and a breadth 51 may be attached to the lower end edge of the partition wall 40. A general-purpose ready-made breadth, for example, a vinyl flooring tree, or the like may be used as the breadth 51.

Furthermore, a ceiling light iron foundation 52 may be suspended from the floor slab F2 on the upper floor. A ceiling finish material 53 may be disposed on the surface of the ceiling light iron foundation 52.

The ceiling finish material 53 is connected to the indoor side wall surface via a parting edge 54 such as a ceiling periphery. As the parting edge 54, a ready-made parting edge made of resin or metal, a joiner, or a workpiece of wood may be used.

As depicted in FIG. 5, each of the lower bonding boards 44 is applied in a lateral direction, and the lower bonding boards 44 being upper and lower are mutually stuck at transverse points 55. A plurality of transverse points 55 extend horizontally and in parallel as seams of a crimp joint type.

The upper bonding board 46 is constructed in a longitudinal direction and is connected to each other via a vertical joint 56 of a desired joint configuration such as a watermark joint, a crimp joint, a joint method, or the like. A plurality of longitudinal joints 56 extend vertically and in parallel.

As the upper bonding board 46, the above-described gypsum-based building material with a magnetic layer may be suitably used. Also, it is preferable that the longitudinal joints 56 between the upper bonding boards 46 perform joint processing using the above-described magnetic joint material.

By using the above-mentioned gypsum-based building material with the magnetic layer as the upper pasting board 46 as described above, a partition wall as a wall structure can be preferably used as walls capable of adsorbing magnetic substances such as magnets. Particularly, by jointing the longitudinal joints 56 between the upper bonding boards 46 with the above-described magnetic joint material, reduction in the adsorption force of the magnetic substances such as the magnets between the upper bonding boards 46 is preferably restrained.

The structure of the partition wall has been described as an example here as the wall structure; however, the wall structure of the present embodiment is not limited to the partition wall but encompasses various wall structures using the above-described gypsum-based building material with the magnetic layer. Also, the example, in which the gypsum-based building material with the magnetic layer is fixed to the lower bonding board, is illustrated here; however, the wall structure of the present embodiment is not limited to this structure and includes a wall structure fixing the above-described gypsum-based building material with the magnetic layer to a stud with screws or the like.

### [Examples]

Specific examples will be described below, but the present invention is not limited to these examples.

### [Experimental Example 1]

In Experimental Example 1, the gypsum-based building material with the magnetic layer depicted in FIG. 1 was prepared and a magnet adsorption test was carried out.

First, manufacturing conditions of the gypsum-based building material with the magnetic layer will be described.

As the gypsum-based building material 11, a gypsum board having a thickness of 8.7 mm, a width of 300 mm, and a length of 400 mm was prepared, and the magnetic layer 12 was formed on the entire main surface 11a of the gypsum board.

For 100 parts by mass of the iron powder, the magnetic layer was formed by applying and drying the iron powder-containing coating material, which was formed by mixing 7.7 parts by mass of a vinyl acetate resin as a binder, which is an organic binder, 0.7 parts by mass of a thickener, 0.2 parts by mass of an antifoaming agent, 0.5 parts by mass of a rust preventive agent, and mixing water, by the scraping method on the main surface of the gypsum-based building material 11 to a thickness of 1 mm.

For the iron powder, as depicted in Table 1, the reduced iron powder was used in Experimental Examples 1-1 to 1-8, atomic iron powder was used in Experimental Examples 1-9 to 1-16, and the iron oxide powder was used in Experimental Examples 1-17 to 1-24. As the iron oxide powder, powder of triiron tetraoxide is used.

An organic acid corrosion inhibitor is used as the rust preventive agent.

In Experimental Examples 1-1 to 1-24, the magnetic layer 12 was formed so that the content per unit area of the iron powder was the value shown in Table 1. Specifically, for example, in Experimental Example 1-1, Experimental Example 1-9, and Experimental Example 1-17, the magnetic layer is formed so that the content of the iron powder per unit area is 0.1 kg/m². In a case of forming the magnetic layer 12 of each of Experimental Examples, by selecting a particle diameter of the iron powder used in the iron powder-containing coating material and by adjusting an amount of the kneading water added to the iron powder-containing coating material, the content of the iron powder per unit area of the magnetic layer 12 was adjusted so as to be a desired value for each of Experimental Examples.

In any Experimental Example, it was confirmed that the density of the formed magnetic layer was 2.5 g/cm³ and the thickness of the magnetic layer was within a range of 1.0 mm ± 0.25 mm.

In the magnet adsorption test, as depicted in FIG. 3, the gypsum-based building material 31 with the magnetic layer produced in each of Experimental Examples is first set up so that the main surface 31a is vertical. Then, one magnet 32 having a diameter of a magnet portion of 17 mmϕ and an adsorption force of 3.5N to the iron plate was used, and the A4 paper 33 was affixed to the main surface 31a by one magnet. Then, a number of sheets of the A4 paper 33 was increased until the A4 paper 33 was dropped, and the number of sheets when the A4 paper 33 dropped was measured as the magnet adsorption force of the gypsum-based building material with the magnetic layer.

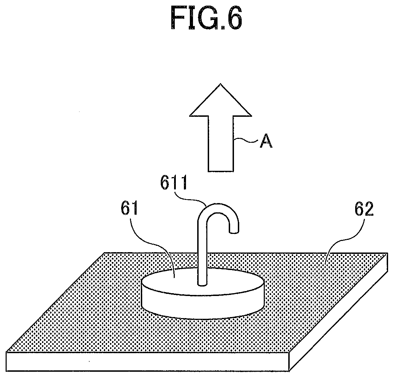

As illustrated in FIG. 6, for the magnet used in the magnet attraction test, a magnet 61 was attracted to an iron plate 62 having a thickness of 1 mm, a hook 611 connected to the magnet 61 is pulled up along a block arrow A at a speed of 3 mm/sec by an autograph (not shown), and a maximum strength was measured. Then, the maximum strength was taken as the adsorption force to a 1 mm iron plate, and the same magnet was used in this experimental example.

Moreover, in a case of performing the magnet adsorption test depicted in FIG. 3, the distance L between a center of the magnet 32 and an upper end of the A4 paper 33 is 3 cm, and a magnet was placed so that the center of the magnet 32 was located at the center in the width direction of the A4 paper 33.

As the A4 paper 33, an A4 paper having a thickness of 0.09 mm and a mass of 64 g/m² was used.

Evaluation results are shown in Table 1.

In Table 1, a numerical value under each of experimental example numbers indicates a result of the magnet adsorption test.

Experimental Examples 1-3 to 1-8, 1-11 to 1-16, 1-19 to 1-24 are examples in the present embodiment, and Experimental Example 1-1, Experimental Example 1-2, Experimental Example 1-9, Experimental Example 1-10, Experimental Example 1-17, and Experimental Example 1-18 are comparative examples.

**[Table 1]**

| TYPE OF IRON POWDER USED FOR MAGNETIC LAYER | CONTENT OF IRON POWDER PER UNIT AREA OF MAGNETIC LAYER [KG/M²] | | | | | | | |
|---|---|---|---|---|---|---|---|---|
| | 0.1 | 0.2 | 0.3 | 0.4 | 0.5 | 0.8 | 1.0 | 1.5 |
| REDUCED IRON POWDER | EXPERIMENT EXAMPLE 1-1 | EXPERIMENT EXAMPLE 1-2 | EXPERIMENT EXAMPLE 1-3 | EXPERIMENT EXAMPLE 1-4 | EXPERIMENT EXAMPLE 1-5 | EXPERIMENT EXAMPLE 1-6 | EXPERIMENT EXAMPLE 1-7 | EXPERIMENT EXAMPLE 1-8 |
| | 0 sheet | 0 sheet | 2 sheets | 3 sheets | 3 sheets | 4 sheets | 4 sheets | 5 sheets |
| ATOMIZED IRON POWDER | EXPERIMENT EXAMPLE 1-9 | EXPERIMENT EXAMPLE 1-10 | EXPERIMENT EXAMPLE 1-11 | EXPERIMENT EXAMPLE 1-12 | EXPERIMENT EXAMPLE 1-13 | EXPERIMENT EXAMPLE 1-14 | EXPERIMENT EXAMPLE 1-15 | EXPERIMENT EXAMPLE 1-16 |
| | 0 sheet | 0 sheet | 3 sheets | 3 sheets | 3 sheets | 4 sheets | 4 sheets | 5 sheets |
| IRON OXIDE POWDER | EXPERIMENT EXAMPLE 1-17 | EXPERIMENT EXAMPLE 1-18 | EXPERIMENT EXAMPLE 1-19 | EXPERIMENT EXAMPLE 1-20 | EXPERIMENT EXAMPLE 1-21 | EXPERIMENT EXAMPLE 1-22 | EXPERIMENT EXAMPLE 1-23 | EXPERIMENT EXAMPLE 1-24 |
| | 0 sheet | 0 sheet | 1 sheet | 1 sheet | 1 sheet | 2 sheets | 2 sheets | 3 sheets |

From results shown in Table 1, in a case in which the content per unit area of the iron powder in the magnetic layer is 0.3 kg/m² or more, one or more A4 size sheets could be held, and it was thus confirmed that the gypsum-based building material with the magnetic layer having such the magnetic layer has sufficient magnet adsorption force.

### [Experimental Example 2]

In Experimental Example 2, in the case of the same amount of iron powder per unit area in the magnetic layer in Experimental Example 1, iron oxide powder having the worst magnet adsorption force was used, a gypsum-based building material with a magnetic layer with different magnetic layer density was prepared and the magnet adsorption force was evaluated.

In this experimental example, in order to obtain a desired density of the magnetic layer formed in each of Experimental Examples, an addition amount of the mixing water contained in the iron powder-containing coating material used for forming the magnetic layer was selected and adjusted, samples of gypsum-based building materials with magnetic layers of Experimental Examples 2-1 to 2-4, in which the density of the magnetic layer was different, were prepared. With respect to the iron powder-containing coating material used for forming the magnetic layer, the content of the components other than the mixing water was determined in the same manner as in the case of Experimental Example 1 (Experimental Examples 1-17 to 1-24).

For each of Experimental Examples, the iron powder-containing coating material, which was adjusted so that each of magnetic layers had the density depicted in Table 2, was applied and dried by the scraping method onto the main surface of the gypsum-based building material 11 to the thickness of 1 mm, and a magnetic layer was thus formed. In each of Experimental Examples, it was confirmed that the content of the iron powder per unit area in the magnetic layer was 0.3 kg/m² and the thickness of the magnetic layer was within the range of 1.0 mm ± 0.25 mm.

As described above, the gypsum-based building material with the magnetic layer was produced in the same manner as in Experimental Example 1 except that for each of Experimental Examples, the iron powder-containing coating material was prepared so that the magnetic layer had the desired density.

For the gypsum-based building material with the magnetic layer thus prepared, the magnet adsorption test was carried out in the same manner as in the case of Experimental Example 1. Results are shown in Table 2. In Table 2, a numerical value under each of experimental example numbers indicates a result of the magnet adsorption test.

Experimental Example 2-1 is a comparative example, and Experimental Examples 2-2 to 2-4 are examples in the present embodiment.

**[Table 2]**

| | EXPERIMENT EXAMPLE 2-1 | EXPERIMENT EXAMPLE 2-2 | EXPERIMENT EXAMPLE 2-3 | EXPERIMENT EXAMPLE 2-4 |
|---|---|---|---|---|
| DENSITY OF MAGNETIC LAYER [G/CM³] | 1.5 | 2.0 | 2.5 | 3.0 |
| MAGNET ADSORPTION TEST RESULT | 0 SHEET | 1 SHEET | 1 SHEET | 2 SHEETS |

From the results shown in Table 2, in Experimental Examples 2-2 to 2-4, in which the density of the magnetic layer was 2.0 g/cm³ or more, one or more sheets of A4 size paper could be held, and it was thus confirmed that the gypsum-based building material with the magnetic layer having such the magnetic layer has sufficient magnet adsorption force.

On the contrary, in Experimental Example 2-1 in which the density of the magnetic layer was less than 2.0 g/cm³, it was confirmed that even one A4 size paper could not be held and the magnet adsorption force was not sufficient.

### [Experimental Example 3]

In Experimental Example 3, a test specimen with wallpaper of 0.3 mm thickness universally was prepared on the entire surface of the magnetic layer of the gypsum-based building material with magnetic layer prepared in Experimental Examples 1-17 to 1-24. As a wallpaper, vinyl cloth was used. The magnet adsorption test was carried out in the same manner as in Experimental Example 1 except that the specimen with such wallpaper was used. The magnet adsorption test was performed using the surface, to which the wallpaper was attached.

Evaluation results are shown in Table 3. Table 3 also shows the experiment example numbers in Experimental Example 1 of the corresponding gypsum-based building material with the magnetic layer before the wallpaper was attached. For example, in Experimental Example 3-1, as shown in Table 3, a wallpaper was stuck on the magnetic layer of the gypsum-based building material with the magnetic layer produced in Experimental Example 1-17. Also, the content of iron powder per unit area of the magnetic layer is shown.

Experimental Examples 3-1 and 3-2 are comparative examples, and Experimental Examples 3-3 to 3-8 are examples in the present embodiment.

| | EXPERIMENT EXAMPLE 3-1 | EXPERIMENT EXAMPLE 3-2 | EXPERIMENT EXAMPLE 3-3 | EXPERIMENT EXAMPLE 3-4 | EXPERIMENT EXAMPLE 3-5 | EXPERIMENT EXAMPLE 3-6 | EXPERIMENT EXAMPLE 3-7 | EXPERIMENT EXAMPLE 3-8 |
|---|---|---|---|---|---|---|---|---|
| CONTENT OF IRON POWDER PER UNIT AREA OF MAGNETIC LAYER [KG/M²] | 0.1 | 0.2 | 0.3 | 0.4 | 0.5 | 0.8 | 1.0 | 1.5 |
| GYPSUM TYPE BUILDING MATERIAL WITH MAGNETIC LAYER USED | EXPERIMENT EXAMPLE 1-17 | EXPERIMENT EXAMPLE 1-18 | EXPERIMENT EXAMPLE 1-19 | EXPERIMENT EXAMPLE 1-20 | EXPERIMENT EXAMPLE 1-21 | EXPERIMENT EXAMPLE 1-22 | EXPERIMENT EXAMPLE 1-23 | EXPERIMENT EXAMPLE 1-24 |
| MAGNET ADSORPTIO N TEST RESULT | 0 SHEET | 0 SHEET | 1 SHEET | 1 SHEET | 1 SHEET | 2 SHEETS | 2 SHEETS | 3 SHEETS |

From the results shown in Table 3, in Experimental Example 3-3 to Experimental Example 3-8, in which the content of the iron powder per unit area of the magnetic layer was 0.3 kg/m² or more, one or more sheets of the A4 paper could be held, and it was confirmed that the gypsum-based building material with the magnetic layer having such the magnetic layer has sufficient magnet adsorption force even when the wallpaper was disposed on the surface.

Moreover, from the comparison of the results of the magnet adsorption test between Experimental Examples 3-3 to Experimental Example 3-8 and the corresponding Experimental Examples 1-19 to 1-24, it was confirmed that even when the wallpaper was stuck, the magnet adsorption force was retained similar to that when no wallpaper was stuck.

On the contrary, in Experimental Examples 3-1 and 3-2, in which the content of iron powder per unit area of the magnetic layer was less than 0.3 kg/m², it was impossible to hold even one A4 sheet, and it was thus confirmed that the magnet adsorption force was not sufficient.

### [Experimental Example 4]

In Experimental Example 4, the gypsum-based building material with the magnetic layer as shown in FIG. 1 or FIG. 2 was prepared and a nonflammability test was carried out.

First, fabricating conditions of the gypsum-based building material with the magnetic layer will be described.

As the gypsum-based building material 11, a gypsum board having a thickness of 8.7 mm, a width of 99 mm, and a length of 99 mm was prepared, and the magnetic layer 12 was formed on the entire main surface 11a of the gypsum board.

The magnetic layer was formed by applying and by drying the iron powder-containing coating material by the scraping method onto the main surface of the gypsum-based building material 11 to be 1 mm in thickness, in which the iron powder-containing coating material was formed for 100 parts by mass of iron powder by mixing 7.7 parts by mass of a vinyl acetate resin as a binder, which is an organic binder, 0.7 parts by mass of a thickener, 0.2 parts by mass of an antifoaming agent, 0.5 parts by mass of a rust preventive agent, and 24 parts by mass of mixing water.

As the iron powder, as shown in Table 4, the reduced iron powder was used in Experimental Examples 4-1 to 4-5, the atomized iron powder was used in Experimental Examples 4-6 to 4-10, and the iron oxide powder was used in Experimental Example 4-11. As the iron oxide powder, the powder of the triiron tetraoxide is used.

The organic acid corrosion inhibitor is used as the rust preventive agent.

In Experimental Examples 4-1 to 4-11, the content of the iron powder in the magnetic layer 12 per unit area is 2.0 kg/m², the density of the magnetic layer 12 is 2.5 g/cm³, and it was confirmed that the thickness of the magnetic layer was within the range of 1.0 ± 0.25 mm.

For the Experimental Examples 4-2 to 4-5 and the Experimental Examples 4-7 to 4-10, the inorganic coating 21 was formed so as to cover the entire upper surface of the magnetic layer 12. The inorganic coating 21 was formed by applying and drying a slurry containing amorphous silica, mica, sodium silicate, lithium silicate, and water. Therefore, the inorganic coating 21 contains an alkali metal silicate flame retardant material, which is an inorganic flame retardant material. The inorganic coating 21 was formed by adjusting the thickness of the inorganic coating 21 so that the mass per unit area of the inorganic coating would be the value shown in Table 4 for each of Experimental Examples.

For Experimental Example 4-1, Experimental Example 4-6, and Experimental Example 4-11, a gypsum-based building material with a magnetic layer having the gypsum-based building material 11 and the magnetic layer 12 shown in FIG. 1 was formed without forming an inorganic coating.

An exothermicity test of the obtained gypsum-based building material with the magnetic layer was conducted in accordance with the exothermicity test shown in the ISO 5660-1 cone calorie meter method, and a total heating value and a maximum heating rate at heating time of 10 minutes or 20 minutes were measured.

Evaluation results are shown in Table 4.

Experimental Examples 4-1 to 4-11 are all examples in the present embodiment.

| | TYPE OF IRON POWDER USED FOR MAGNETIC LAYER | MASS PER UNIT AREA OF INORGANIC COATING | TOTAL CALORIFIC VALUES | | MAXIMUM HEATING RATE |
|---|---|---|---|---|---|
| | | | 10 MINUTES | 20 MINUTES | |
| EXPERIMENT EXAMPLE 4-1 | REDUCED IRON POWDER | 0 | 14.9 | 19.0 | 105.7 |
| EXPERIMENT EXAMPLE 4-2 | | 10 | 9.1 | 12.1 | 70.1 |
| EXPERIMENT EXAMPLE 4-3 | | 20 | 7.0 | 10.0 | 62.6 |
| EXPERIMENT EXAMPLE 4-4 | | 30 | 5.0 | 6.1 | 7.0 |
| EXPERIMENT EXAMPLE 4-5 | | 60 | 3.6 | 4.8 | 3.3 |
| EXPERIMENT EXAMPLE 4-6 | ATOMIZED IRON POWDER | 0 | 14.1 | 19.5 | 102.4 |
| EXPERIMENT EXAMPLE 4-7 | | 10 | 8.8 | 11.4 | 74.6 |
| EXPERIMENT EXAMPLE 4-8 | | 20 | 7.2 | 9.8 | 58.3 |
| EXPERIMENT EXAMPLE 4-9 | | 30 | 5.5 | 6.7 | 5.8 |
| EXPERIMENT EXAMPLE 4-10 | | 60 | 4.0 | 4.5 | 2.9 |
| EXPERIMENT EXAMPLE 4-11 | IRON OXIDE POWDER | 0 | 5.5 | 6.7 | 110.5 |

From the results shown in Table 4, it was confirmed that incombustibility was enhanced by forming the inorganic coating film. In particular, it was also confirmed that the incombustibility improves as the mass per unit area of the inorganic coating increases.

In particular, in a case of using the reduced iron powder or atomized iron powder as the iron powder, by setting the mass per unit area of the inorganic coating to a certain amount or more, it was confirmed that a total calorific value at a heating start time of 10 minutes, which is a standard recognized as a quasi-incombustible material, was 8 MJ/m² or less (Experimental Example 4-3, Experimental Example 4-8). Then, by further increasing the mass of the unit area of the inorganic coating, it was confirmed that the total calorific value at the heating start time of 20 minutes, which is a standard recognized as incombustible material, was 8 MJ/m² or less (Experimental Example 4-4, Experimental Example 4-5, Experimental Example 4-9, Experimental Example 4-10).

In addition, in a case of using the iron oxide powder as the iron powder, it was also confirmed that the total calorific value at the heating start time of 20 minutes became 8 MJ/m² or less even when no inorganic coating was formed.

When the magnet adsorption test was carried out in the same manner as in Experimental Examples 1 and 3, it was confirmed that one or more sheets of the A4 paper could be held in the gypsum-based building material with a magnetic layer produced in any experimental example.

### [Experimental Example 5]

In Experimental Example 5, the gypsum-based building material with the magnetic layer depicted in FIG. 1 was prepared and smoothness was compared by means for forming the magnetic layer.

Production conditions of the gypsum-based building material with the magnetic layer will be described.

As the gypsum-based building material 11, a gypsum board having a thickness of 8.7 mm, a width of 910 mm, and a length of 1820 mm was prepared, and the magnetic layer 12 was formed on the entire main surface 11a of the gypsum board.

For 100 parts by mass of iron powder, the iron powder-containing coating material, which was formed by mixing 7.7 parts by mass of a vinyl acetate resin as a binder, which is an organic binder, 0.7 parts by mass of a thickener, 0.2 parts by mass of an antifoaming agent, 0.5 parts by mass of a rust preventive agent, and 24 parts by mass of a base water, was prepared. The reduced iron powder was used as the iron powder and organic acid type rust preventive agent was used as the rust preventive agent.

By using a flow coater in Experimental Example 5-1, using a roll coater in Experimental Example 5-2, and using a scraping method in Experiment 5-3, the magnetic layer was coated so that the thickness of the magnetic layer became 1 mm, and dried to be formed.

In each of the obtained magnetic layers, the content per unit area of the iron powder was 2.0 kg/m², and the density was 2.5 g/cm³. In addition, the thickness of the magnetic layer was within the range of 1.0 mm ± 0.25 mm.

With respect to the gypsum-based building material with the magnetic layer produced in each of Experimental Examples, thickness was measured in the same manner as in "a) Thickness" of "7.3.1 Dimensions" of JIS A 6901 (2014). Specifically, the thickness was measured at six measurement positions at equal intervals in a region within 25 mm from an end surface of the gypsum-based building material with the magnetic layer and inside at least 80 mm from both side surfaces.

Before the magnetic layer was formed, the thickness of the gypsum board at the same position as each measurement point, in which the thickness of the gypsum-based building material with the magnetic layer was measured, was measured in advance. The thickness of the magnetic layer was calculated from the measured value of the gypsum-based building material with the magnetic layer and the thickness of the gypsum board previously measured.

The results are shown in Tables 5-1 to 5-3. Tables 5-1 to 5-3 show the measurement results of the thickness of the gypsum-based building material with the magnetic layer prepared in Experimental Examples 5-1 to 5-3 respectively, a difference between a maximum value and a minimum value of the measured values, and an average of the measured values.

Experimental Examples 5-1 to 5-3 are all examples in the present embodiment.

**[Table 5-1]**

| | | MEASUREMENT POINT 1 | MEASUREMENT POINT 2 | MEASUREMENT POINT 3 | MEASUREMENT POINT 4 | MEASUREMENT POINT 5 | MEASUREMENT POINT 6 | MAXIMUM VALUE-MINIMUM VALUE | AVERAGE VALUE |
|---|---|---|---|---|---|---|---|---|---|
| THICKNESS OF GYPSUM TYPE BUILDING MATERIAL WITH MAGNETIC LAYER | [mm] | 9.71 | 9.83 | 9.82 | 9.84 | 9.74 | 9.67 | 0.17 | 9.77 |
| GYPSUM BOARD THICKNESS | [mm] | 8.75 | 8.75 | 8.78 | 8.80 | 8.77 | 8.73 | 0.07 | 8.76 |
| THICKNESS OF MAGNETIC LAYER | [mm] | 0.96 | 1.08 | 1.04 | 1.04 | 0.97 | 0.94 | 0.14 | 1.00 |

**[Table 5-2]**

| | | MEASUREMENT POINT 1 | MEASUREMENT POINT 2 | MEASUREMENT POINT 3 | MEASUREMENT POINT 4 | MEASUREMENT POINT 5 | MEASUREMENT POINT 6 | MAXIMUM VALUE-MINIMUM VALUE | AVERAGE VALUE |
|---|---|---|---|---|---|---|---|---|---|
| THICKNESS OF GYPSUM TYPE BUILDING MATERIAL WITH MAGNETIC LAYER | [mm] | 9.71 | 9.62 | 9.62 | 9.78 | 9.68 | 9.63 | 0.16 | 9.67 |
| GYPSUM BOARD THICKNESS | [mm] | 8.68 | 8.72 | 8.73 | 8.74 | 8.69 | 8.66 | 0.08 | 8.70 |
| THICKNESS OF MAGNETIC LAYER | [mm] | 1.03 | 0.90 | 0.89 | 1.04 | 0.99 | 0.97 | 0.05 | 0.97 |

**[Table 5-3]**

| | | MEASUREMENT POINT 1 | MEASUREMENT POINT 2 | MEASUREMENT POINT 3 | MEASUREMENT POINT 4 | MEASUREMENT POINT 5 | MEASUREMENT POINT 6 | MAXIMUM VALUE-MINIMUM VALUE | AVERAGE VALUE |
|---|---|---|---|---|---|---|---|---|---|
| THICKNESS OF GYPSUM TYPE BUILDING MATERIAL WITH MAGNETIC LAYER | [mm] | 9.73 | 9.75 | 9.76 | 9.76 | 9.73 | 9.70 | 0.06 | 9.74 |
| GYPSUM BOARD THICKNESS | [mm] | 8.72 | 8.73 | 8.75 | 8.74 | 8.70 | 8.70 | 0.05 | 8.72 |
| THICKNESS OF MAGNETIC LAYER | [mm] | 1.01 | 1.02 | 1.01 | 1.02 | 1.03 | 1.00 | 0.03 | 1.02 |

From the results shown in Tables 5-1 to 5-3, it was confirmed that the gypsum-based building material with the magnetic layer with a smooth surface could be produced even in a case in which the magnetic layer was formed by any means.

Moreover, it was confirmed that the gypsum-based building materials with the magnetic layers prepared in Experimental Examples 5-1 to 5-3 had thicknesses within a range of 9.5 mm or more and 10.0 mm or less at any measurement point, and the thicknesses satisfied the standard of JIS A 6901 (2014) in its thickness.

### [Experimental Example 6]

In Experimental Example 6, the gypsum type building material with the magnetic layer shown in FIG. 1 was produced. However, in this Experimental Example, the rust inhibitor was compounded in the magnetic layer, and the antirust performance of the obtained gypsum-based building material with the magnetic layer was compared.

Production conditions of the gypsum type building material with the magnetic layer will be described.

As the gypsum-based building material 11, a gypsum board having a thickness of 8.7 mm, a width of 99 mm, and a length of 99 mm was prepared, and the magnetic layer 12 was formed on the entire main surface 11a of the gypsum board.

In forming the magnetic layer 12, first, for 100 parts by mass of iron powder, a coating material containing iron powder was prepared, in which the coating material containing iron powder is formed by mixing 7.7 parts by mass of a vinyl acetate resin as a binder, which is an organic binder, 0.7 part by mass of a thickener, 0.2 parts by mass of an antifoaming agent and 24 parts by mass of mixing water. In addition, for each of Experimental Examples, a rust preventive agent was added to the iron powder-containing coating material so that a ratio to the iron powder was a ratio shown in Table 6.

When preparing the iron powder-containing coating material, the reduced iron powder is used as the iron powder. As the rust inhibitor, as shown in Table 6, an organic acid type rust preventive agent was used in Experimental Example 6-1 to Experimental Example 6-6, a fatty acid type rust preventive agent was used in Experimental Examples 6-7 to 6-12, an organic acid amine type rust inhibitor was used in Experimental Examples 6-13 to 6-18, and a nitrite type rust preventive agent was used in Experimental Examples 6-19 to 6-24.

Then, the prepared iron powder-containing coating material was applied by scraping to the main surface of the gypsum-based building material 11 to have a thickness of 1 mm and was dried to form the magnetic layer, and the gypsum-based building material with the magnetic layer was prepared. It was confirmed that the thickness of the magnetic layer of the obtained gypsum-based building material with the magnetic layer was within a range of 1.0 ± 0.25 mm.

Because the rust preventive added to the iron powder-containing coating material was 0.5% by mass with respect to the iron powder at the maximum and was a trace amount, the content of the iron powder per unit area of the obtained magnetic layer was 2.0 kg/m² in each of Experimental Examples 6-1 to 6-24. For the same reason, the density of the magnetic layer is 2.5 g/cm³ in each of Experimental Examples 6-1 to 6-24.

The obtained gypsum-based building material with the magnetic layer was allowed to stand in an environment of 40 °C and 90% RH for 24 hours, and an occurrence of rust was visually confirmed. Evaluation results are shown in Table 6.

Experimental Examples 6-1 to 6-24 are all examples in the present embodiment.

**[Table 6]**

| TYPES OF RUST INHIBITORS | ADDITION AMOUNT OF RUST INHIBITOR MASS% (IRON POWDER RATIO) | | | | | |
|---|---|---|---|---|---|---|
| | 0.01 | 0.05 | 0.08 | 0.1 | 0.3 | 0.5 |
| ORGANIC ACID TYPE | EXPERIMENT EXAMPLE 6-1 | EXPERIMENT EXAMPLE 6-2 | EXPERIMENT EXAMPLE 6-3 | EXPERIMENT EXAMPLE 6-4 | EXPERIMENT EXAMPLE 6-5 | EXPERIMENT EXAMPLE 6-6 |
| | OCCURRED ALL OVER | OCCURRED IN PART | NO RUST | NO RUST | NO RUST | NO RUST |
| FATTY ACID TYPE | EXPERIMENT EXAMPLE 6-7 | EXPERIMENT EXAMPLE 6-8 | EXPERIMENT EXAMPLE 6-9 | EXPERIMENT EXAMPLE 6-10 | EXPERIMENT EXAMPLE 6-11 | EXPERIMENT EXAMPLE 6-12 |
| | OCCURRED ALL OVER | OCCURRED ALL OVER | OCCURRED IN PART | NO RUST | NO RUST | NO RUST |
| ORGANIC ACID AMINE TYPE | EXPERIMENT EXAMPLE 6-13 | EXPERIMENT EXAMPLE 6-14 | EXPERIMENT EXAMPLE 6-15 | EXPERIMENT EXAMPLE 6-16 | EXPERIMENT EXAMPLE 6-17 | EXPERIMENT EXAMPLE 6-18 |
| | OCCURRED ALL OVER | OCCURRED IN PART | OCCURRED IN PART | NO RUST | NO RUST | NO RUST |
| NITRITE TYPE | EXPERIMENT EXAMPLE 6-19 | EXPERIMENT EXAMPLE 6-20 | EXPERIMENT EXAMPLE 6-21 | EXPERIMENT EXAMPLE 6-22 | EXPERIMENT EXAMPLE 6-23 | EXPERIMENT EXAMPLE 6-24 |
| | OCCURRED ALL OVER | OCCURRED ALL OVER | OCCURRED IN PART | NO RUST | NO RUST | NO RUST |

As shown in Table 6, it was confirmed that rust did not occur in the gypsum-based building materials with the magnetic layer mixed with various antirust agents in an iron powder ratio of 0.1% by mass or more.

When the magnet adsorption test was carried out in the same manner as in Experimental Examples 1 and 3, it was confirmed that one or more sheets of the A4 paper could be held in the gypsum-based building material with the magnetic layer produced in any experimental example.

Although the method of manufacturing the gypsum-based building material with the magnetic layer, the magnetic joint material and the gypsum-based building material with the magnetic layer has been described in the embodiment and the like, the present invention is not limited to the above embodiment and the like. Various modifications and changes are possible within the scope of the gist of the present invention described in the claims.

### EXPLANATION OF REFERENCE NUMERALS

10, 20, 31 gypsum-based building material with a magnetic layer
11 gypsum-based building material
12 magnetic layer
21 inorganic coating

## Claims

1. A gypsum-based building material with a magnetic layer (10, 20, 31), comprising:
the gypsum-based building material (11);
the magnetic layer (12) covering at least a part of a surface of the gypsum-based building material (11),
wherein the magnetic layer (12) contains iron powder and a binder, **characterised in that** a content per unit area of the iron powder is 0.3 kg/m² or more and a density of the magnetic layer is 2.0 g/cm³ or more.

2. The gypsum-based building material with the magnetic layer (10, 20, 31) as claimed in claim 1, further comprising:
an inorganic coating (21),
wherein a mass per unit area of the inorganic coating (21) is 20 g/m² or more.

3. The gypsum-based building material with the magnetic layer (10, 20, 31) as claimed in claim 2, wherein the inorganic coating (21) contains an inorganic flame retardant material.

4. The gypsum-based building material with the magnetic layer (10, 20, 31) as claimed in any one of claims 1 through 3, wherein a semi-incombustible performance as stipulated in Article 1, Item 5 of the Building Law Enforcement Order is satisfied.

5. The gypsum-based building material with the magnetic layer (10, 20, 31) as claimed in any one of claims 1 through 3, wherein an incombustible performance as stipulated in Article 2, Item 9 of the Building Law Enforcement Order is satisfied.

6. The gypsum-based building material with the magnetic layer (10, 20, 31) as claimed in any one of claims 1 through 5, wherein the surface is smooth.

7. The gypsum-based building material with the magnetic layer (10, 20, 31) as claimed in any one of claims 1 through 6, wherein the gypsum-based building material (11) is a gypsum board.

8. The gypsum-based building material with the magnetic layer (10, 20, 31) as claimed in any one of claims 1 through 7, wherein the iron powder contains one or more kinds selected from iron oxide powder, reduced iron powder, and atomized iron powder.

9. The gypsum-based building material with the magnetic layer (10, 20, 31) as claimed in any one of claims 1 through 8, wherein the magnetic layer (12) further contains a rust preventive agent in a proportion of 0.1% by mass or more based on the iron powder.

10. A method for fabricating a gypsum-based building material with a magnetic layer (10, 20, 31), the method comprising:
a magnetic layer (12) formation step for forming a magnetic layer by applying an iron powder-containing coating material containing iron powder and a binder to at least a part of a surface of the gypsum-based building material (11),
**characterised in that**, in the magnetic layer (12), the iron powder content per unit area is 0.3 kg/m² or more and the magnetic layer (12) density is 2.0 g/cm³ or more.

11. The method as claimed in claim 10, further comprising an inorganic coating forming step for forming an inorganic coating (21) on the magnetic layer (12) so that the mass per unit area is 20 g/m² or more.

## Patentansprüche

1. Ein Baustoff auf Gipsbasis mit einer Magnetschicht (10, 20, 31), umfassend:
das gipsbasierten Baumaterial (11);
die magnetische Schicht (12), die mindestens einen Teil einer Oberfläche des gipsbasierten Baumaterials (11) bedeckt,
wobei die magnetische Schicht (12) Eisenpulver und ein Bindemittel enthält, **dadurch gekennzeichnet, dass** ein Gehalt pro Flächeneinheit des Eisenpulvers 0,3 kg/m² oder mehr und eine Dichte der magnetischen Schicht 2,0 g/cm³ oder mehr beträgt.

2. Baustoff auf Gipsbasis mit der Magnetschicht (10, 20, 31) nach Anspruch 1, ferner umfassend:
eine anorganische Beschichtung (21),
wobei eine Masse pro Flächeneinheit der anorganischen Beschichtung (21) 20 g/m² oder mehr beträgt.

3. Baustoff auf Gipsbasis mit der Magnetschicht (10, 20, 31) nach Anspruch 2, wobei die anorganische Beschichtung (21) ein anorganisches flammhemmendes Material enthält.

4. Baustoff auf Gipsbasis mit der Magnetschicht (10, 20, 31) nach einem der Ansprüche 1 bis 3, wobei ein Grad der Unverbrennbarkeit ("semi-incombustible") erfüllt ist, wie er in Artikel 1, Punkt 5 der Durchsetzungsverordnung für Baurecht festgelegt ist.

5. Baustoff auf Gipsbasis mit der Magnetschicht (10, 20, 31) nach einem der Ansprüche 1 bis 3, wobei eine unbrennbare Leistung gemäß Artikel 2, Punkt 9 der Durchsetzungsverordnung für Baurecht erfüllt ist.

6. Baustoff auf Gipsbasis mit der Magnetschicht (10, 20, 31) nach einem der Ansprüche 1 bis 5, wobei die Oberfläche glatt ist.

7. Baustoff auf Gipsbasis mit der Magnetschicht (10, 20, 31) nach einem der Ansprüche 1 bis 6, wobei der Baustoff auf Gipsbasis (11) eine Gipsplatte ist.

8. Baustoff auf Gipsbasis mit der Magnetschicht (10, 20, 31) nach einem der Ansprüche 1 bis 7, wobei das Eisenpulver eine oder mehrere Arten enthält, ausgewählt aus Eisenoxidpulver, reduziertem Eisenpulver und zerstäubtem Eisenpulver.

9. Baustoff auf Gipsbasis mit der Magnetschicht (10, 20, 31) nach einem der Ansprüche 1 bis 8, wobei die Magnetschicht (12) weiterhin ein Rostschutzmittel in einem Anteil von 0,1 Massen-% oder mehr, bezogen auf das Eisenpulver, enthält.

10. Verfahren zur Herstellung eines Baustoffs auf Gipsbasis mit einer Magnetschicht (10, 20, 31), wobei das Verfahren umfasst:
einen Schritt der Bildung einer Magnetschicht (12) zur Bildung einer Magnetschicht durch Aufbringen eines Eisenpulver enthaltenden Beschichtungsmaterials, das Eisenpulver und ein Bindemittel enthält, auf mindestens einen Teil einer Oberfläche des Baustoffs auf Gipsbasis (11),
**dadurch gekennzeichnet, dass** in der Magnetschicht (12) der Eisenpulvergehalt pro Flächeneinheit 0,3 kg/m² oder mehr und die Dichte der Magnetschicht (12) 2,0 g/cm³ oder mehr beträgt.

11. Verfahren nach Anspruch 10, ferner umfassend einen Schritt zur Bildung einer anorganischen Beschichtung zur Bildung einer anorganischen Beschichtung (21) auf der Magnetschicht (12), so dass die Masse pro Flächeneinheit 20 g/m² oder mehr beträgt.

## Revendications

1. Matériau de construction à base de gypse avec une couche magnétique (10, 20, 31), comprenant :
le matériau de construction à base de gypse (11) ;
la couche magnétique (12) recouvrant au moins une partie d'une surface du matériau de construction à base de gypse (11),
dans lequel la couche magnétique (12) contient de la poudre de fer et un liant, **caractérisé en ce que**
une teneur par surface unitaire de la poudre de fer est de 0,3 kg/m² ou supérieure et une densité de la couche magnétique est de 2,0 g/cm³ ou supérieure.

2. Matériau de construction à base de gypse avec la couche magnétique (10, 20, 31) selon la revendication 1, comprenant de plus :
un revêtement inorganique (21),
dans lequel une masse par surface unitaire du revêtement inorganique (21) est de 20 g/m² ou supérieure.

3. Matériau de construction à base de gypse avec la couche magnétique (10, 20, 31) selon la revendication 2, dans lequel le revêtement inorganique (21) contient un matériau retardateur de flamme inorganique.

4. Matériau de construction à base de gypse avec la couche magnétique (10, 20, 31) selon l'une quelconque des revendications 1 à 3, dans lequel une performance semi-incombustible comme stipulée dans Article 1, Item 5 of The Building Law Enforcement Order est satisfaite.

5. Matériau de construction à base de gypse avec la couche magnétique (10, 20, 31) selon l'une quelconque des revendications 1 à 3, dans lequel une performance incombustible comme stipulée dans Article 2, Item 9 of The Building Law Enforcement Order est satisfaite.

6. Matériau de construction à base de gypse avec la couche magnétique (10, 20, 31) selon l'une quelconque des revendications 1 à 5, dans lequel la surface est lisse.

7. Matériau de construction à base de gypse avec la couche magnétique (10, 20, 31) selon l'une quelconque des revendications 1 à 6, dans lequel le matériau de construction à base de gypse (11) est une plaque de gypse.

8. Matériau de construction à base de gypse avec la couche magnétique (10, 20, 31) selon l'une quelconque des revendications 1 à 7, dans lequel la poudre de fer contient un ou plusieurs types choisis parmi de la poudre d'oxyde de fer, de la poudre de fer réduite, et de la poudre de fer atomisée.

9. Matériau de construction à base de gypse avec la couche magnétique (10, 20, 31) selon l'une quelconque des revendications 1 à 8, dans lequel la couche magnétique (12) contient de plus un agent de prévention de la rouille dans une proportion de 0,1 % en masse ou plus sur la base de la poudre de fer.

10. Procédé pour la fabrication d'un matériau de construction à base de gypse avec la couche magnétique (10, 20, 31), le procédé comprenant :
une étape de formation de couche magnétique (12) pour former une couche magnétique par application d'un matériau de revêtement contenant de la poudre de fer contenant de la poudre de fer et un liant sur au moins une partie d'une surface du matériau de construction à base de gypse (11),
**caractérisé en ce que**,
dans la couche magnétique (12), la teneur en poudre de fer par surface unitaire est de 0,3 kg/m² ou supérieure et la densité de couche magnétique (12) est de 2,0 g/cm³ ou supérieure.

11. Procédé selon la revendication 10, comprenant de plus une étape de formation de revêtement inorganique pour former un revêtement inorganique (21) sur la couche magnétique (12) de sorte que la masse par surface unitaire soit de 20 g/m² ou supérieure.
